# EUROPEAN PATENT APPLICATION

(11) **EP 3 896 580 A1**
(43) Date of publication of application: **20.10.2021**
(21) Application number: 21160031.7
(22) Date of filing: 01.03.2021
(51) Int. Cl.: G06F 16/332

(54) **METHOD AND APPARATUS FOR GENERATING CONVERSATION, ELECTRONIC DEVICE, STORAGE MEDIUM AND COMPUTER PROGRAM PRODUCT**

(30) Priority: 13.04.2020 CN 202010285648
(71) Applicant: Beijing Baidu Netcom Science and Technology Co., Ltd., Beijing 100085 (CN)
(72) Inventor: XU, Jun, Beijing, Beijing 100085 (CN); LEI, Zeyang, Beijing, Beijing 100085 (CN); NIU, Zhengyu, Beijing, Beijing 100085 (CN); WU, Hua, Beijing, Beijing 100085 (CN); WANG, Haifeng, Beijing, Beijing 100085 (CN)
(74) Representative: dompatent von Kreisler Selting Werner - Partnerschaft von Patent- und Rechtsanwälten mbB

(57) **Abstract**

A method and apparatus for generating a conversation, an electronic device, a storage medium and a computer program product, which relate to the field of artificial intelligence, are disclosed. The method may include: acquiring conversation content to be replied; determining an event node matched with the conversation content from an event graph, the event graph being a pre-constructed directed graph and including event nodes corresponding to different events respectively, and sides between the event nodes indicating logical relationships between the different events; determining an event node for guiding reply generation from the event graph according to the matched event node and the connection mode among the event nodes; and generating conversation reply content according to the event node for guiding reply generation. With the technical solution, dialog coherent, informative, and engaging multi-turn conversation may be generated.

## Description

### TECHNICAL FIELD

The present application relates to a computer application technology, and particularly to a method and apparatus for generating a conversation, an electronic device, a storage medium and a computer program product in the field of artificial intelligence (AI).

### BACKGROUND

The current man-machine conversation technology is mainly aimed at a task-type conversation or specific-domain conversation, and for open-domain conversations, i.e., a chat without domain limitation, no well mechanism is available for supporting dialog coherent and informative multi-turn conversation generation.

### SUMMARY

The present application provides a method and apparatus for generating a conversation, an electronic device and a storage medium.

According to an embodiment, a method for generating a conversation includes:
acquiring conversation content to be replied;
determining an event node matched with the conversation content from an event graph, the event graph being a pre-constructed directed graph and including event nodes corresponding to different events respectively, and sides between the event nodes indicating logical relationships between the different events;
determining an event node for guiding reply generation from the event graph according to the matched event node and the connection mode among the event nodes; and
generating conversation reply content according to the event node for guiding reply generation.

According to an embodiment, an apparatus for generating a conversation includes:
a conversation acquiring module configured to acquire conversation content to be replied;
an event determining module configured to: determine an event node matched with the conversation content from an event graph, the event graph being a pre-constructed directed graph and including event nodes corresponding to different events respectively, and sides between the event nodes indicating logical relationships between the different events; and determine an event node for guiding reply generation from the event graph according to the matched event node and the connection mode among the event nodes; and
a reply generating module configured to generate conversation reply content according to the event node for guiding reply generation.

According to an embodiment, an electronic device includes:
at least one processor; and
a memory connected with the at least one processor communicatively;
where the memory stores instructions executable by the at least one processor to cause the at least one processor to perform the method as mentioned above.

There is provided a non-transitory computer-readable storage medium including instructions, which, when executed by a computer, cause the computer to carry out the method as mentioned above.

There is provided a computer program product including instructions which, when the program is executed by a computer, cause the computer to carry out the method as mentioned above.

Some embodiments of the above-mentioned application has the following advantages or beneficial effects: in the process of a man-machine conversation, such as an open-domain conversation, the event node matched with the conversation content to be replied is determined based on the pre-constructed event graph, the event node for guiding reply generation is further determined based on the matched event node, or the like, and the conversation reply content is then generated according to the event node for guiding reply generation; that is, a conversation policy management mechanism based on the event graph is introduced in the conversation process, the logical order of the reply content in the conversation process may be better modeled, and the planning process of the conversation reply content is assisted using the event graph, thereby generating dialog coherent, informative and engaging multi-turn conversation. It should be understood that the statements in this section are not intended to identify key or critical features of the embodiments of the present disclosure, nor limit the scope of the present disclosure. Other features of the present disclosure will become apparent from the following description.

### BRIEF DESCRIPTION OF THE DRAWINGS

The drawings are used for better understanding the present solution and do not constitute a limitation of the present application. In the drawings:
Fig. 1 is a flow chart of a method for generating a conversation according to a first embodiment of the present application;
Fig. 2 is a schematic diagram of a part of an event graph according to the present application;
Fig. 3 is a flow chart of a method for generating a conversation according to a second embodiment of the present application;
Fig. 4 is a schematic structural diagram of an apparatus 40 for generating a conversation according to an embodiment of the present application; and
Fig. 5 is a block diagram of an electronic device for the method according to some embodiments of the present application.

### DETAILED DESCRIPTION OF EMBODIMENTS

The following part will illustrate exemplary embodiments of the present application with reference to the figures, including various details of the embodiments of the present application for a better understanding. The embodiments should be regarded only as exemplary ones. Therefore, those skilled in the art should appreciate that various changes or modifications can be made with respect the embodiments described herein without departing from the scope and spirit of the present application. Similarly, for clarity and conciseness, the descriptions of the known functions and structures are omitted in the descriptions below.

In addition, it should be understood that the term "and/or" only describes an association relationship between associated objects, and indicates that three relationships may exist. For example, A and/or B may indicate three cases: only A exists; both A and B exist; and only B exists. In addition, in this specification, the symbol "/" generally indicates that associated objects before and after have a relationship of "or".

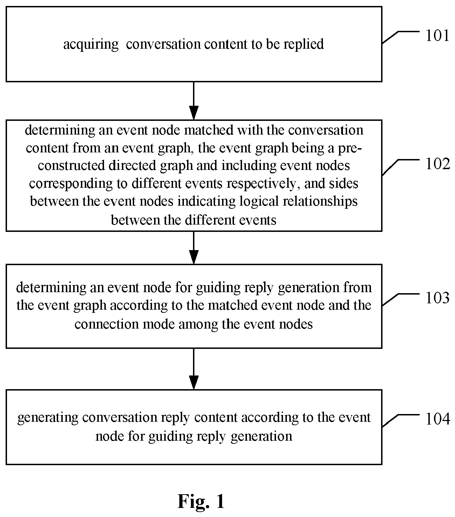

Fig. 1 is a flow chart of a method for generating a conversation according to a first embodiment of the present application. As shown in Fig. 1, the method includes the following implementation steps:
101: acquiring conversation content to be replied.
102: determining an event node matched with the conversation content from an event graph, the event graph being a pre-constructed directed graph and including event nodes corresponding to different events respectively, and sides between the event nodes indicating logical relationships between the different events.
103: determining an event node for guiding reply generation from the event graph according to the matched event node and the connection mode among the event nodes.
104: generating conversation reply content according to the event node for guiding reply generation.

It may be seen that, in order to implement the method according to this embodiment, the event graph is required to be pre-constructed, and the event graph is a directed graph in which events, such as verb phrases, are used as nodes; that is, the directed graph contains the event nodes corresponding to the different events respectively, and the sides between the event nodes indicate the logical relationships between the different events. Here, the logical relationships may refer to, for example, a temporal order, a causal relationship, etc.

The event graph may be constructed based on narrative text which may refer to Chinese story text, English story text, or the like. The different events, the logical relationships between the different events, or the like, may be extracted from the narrative text by analyzing the narrative text, so as to construct the event graph. A specific implementation is the prior art. For example, the extracted events may include "today is Halloween", "dress up as a monster", "ask for candies", or the like.

After constructed, the event graph may be applied to an actual conversation process, such as an open-domain conversation process. Correspondingly, in the conversation process, the event node matched with the acquired conversation content to be replied (such as a sentence/query/utterance from a user) may be first determined from the event graph.

Preferably, word segmentation may be first performed on the conversation content according to the existing word segmentation technology, one or more event nodes in the event graph corresponding to the result of the word segmentation may be then determined as candidate matched event nodes respectively, if there is only one candidate matched event nodes, the candidate matched event node will be taken as the event node matched with the conversation content, and if there are a plurality of candidate matched event nodes, one of the candidate matched event nodes may be selected as the event node matched with the conversation content.

One or more semantic elements, such as one or more verb phrases, may be included in the result of the word segmentation obtained after word segmentation is performed on the conversation content. The event nodes in the event graph corresponding to the word segmentation results may be determined according to the prior art respectively, such that one or more event nodes may be determined and taken as the candidate matched event nodes. If the number of the candidate matched event nodes is one, the candidate matched event node may be directly taken as the event node matched with the conversation content, and if the number of the candidate matched event nodes is greater than one, one of the candidate matched event nodes may be selected as the event node matched with the conversation content.

When one of the candidate matched event nodes is required to be selected as the event node matched with the conversation content, the similarity between each candidate matched event node and the conversation content may be calculated respectively, and then, the candidate matched event node with the highest similarity is taken as the event node matched with the conversation content. The similarity may refer to similarity between character strings, between corresponding word vector representations, or the like, without implementation limitation.

With the above-mentioned processing process, the event node matched with the conversation content may be conveniently determined quickly, and the determination result has good accuracy.

Then, the event node for guiding reply generation may be determined from the event graph according to the matched event node and the connection mode among the event nodes.

Preferably, one or more event nodes which conform to a preset connection relationship with the matched event node may be first screened out from the event graph and serve as candidate reply event nodes; the one or more event nodes which conform to the preset connection relationship with the matched event node may include: an event node directly connected with the matched event node through a side; or an event node directly connected with the matched event node through a side and an event node indirectly connected with the matched event node through N event nodes, N being a positive integer and having a value determined according to actual requirements. If there is one candidate reply event node, the candidate reply event node may be taken as the event node for guiding reply generation, and if there are a plurality of the candidate reply event nodes, one of the candidate reply event nodes may be selected as the event node for guiding reply generation.

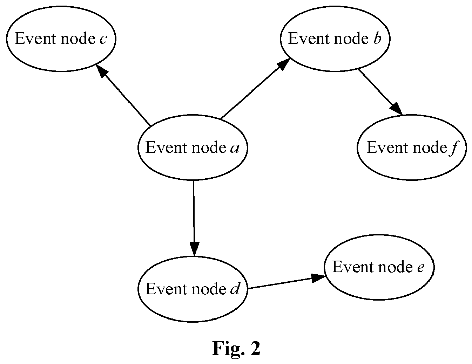

Fig. 2 is a schematic diagram of a part of the event graph according to the present application. As shown in Fig. 2, taking event node *a* as an example, event node *b,* event node c and event node *d* are directly connected with the event node *a* through a side, and event node *f* and event node *e* are indirectly connected with the event node *a* through one event node.

When one of the candidate reply event nodes is selected as the event node for guiding reply generation, in conjunction with the reasonability of a semantic logical order, the relevance with the conversation content and the relevance with all historical conversations in the current conversation process of each candidate reply event node, an optimal candidate reply event node may be selected from the candidate reply event nodes to serve as the event node for guiding reply generation.

For example, for any candidate reply event node, the score of the reasonability of the semantic logical order with the matched event node, the score of the relevance with the conversation content (i.e., local relevance score), and the score of the relevance with all the historical conversations in the current conversation process (i.e., global relevance score) may be calculated according to a preset calculation rule respectively, and multiplied by corresponding weights respectively, and the sum of the three products may be taken as the overall score of the candidate reply event node, with different weights having the same or different values. After the overall score of each candidate reply event node is obtained, the candidate reply event node with the highest overall score may be selected as the event node for guiding reply generation.

It may be seen that, in this way, the event node for guiding reply generation may be accurately selected based on the connection mode among the event nodes, the reasonability of the semantic logical order, the local relevance and the global relevance of the conversations, or the like, and then, the dialog coherent, the accuracy, or the like, of the conversation reply content which is generated subsequently are further improved.

Then, the conversation reply content may be generated according to the event node for guiding reply generation. Further, the conversation reply content may be generated according to the event node for guiding reply generation and the conversation content.

Preferably, the event node for guiding reply generation and the conversation content may be input into a pre-trained reply generating model, so as to obtain the conversation reply content. The reply generating model may be pre-trained with conversation data, or the like.

In other words, the conversation reply content may be generated in conjunction with the conversation content using the event node for guiding reply generation and the trained reply generating model, thereby further improving the dialog coherence, the accuracy, or the like, of the generated conversation reply content.

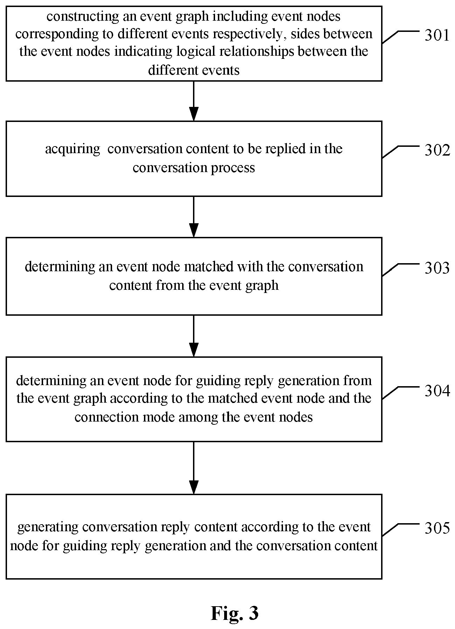

In conjunction with the above description, Fig. 3 is a flow chart of a method for generating a conversation according to a second embodiment of the present application. As shown in Fig. 3, the method includes the following implementation steps.

301: constructing an event graph including event nodes corresponding to different events respectively, sides between the event nodes indicating logical relationships between the different events.

302: acquiring conversation content to be replied in the conversation process.

303: determining an event node matched with the conversation content from the event graph.

Word segmentation may be performed on the conversation content, one or more event nodes in the event graph corresponding to the word segmentation results may be determined as candidate matched event nodes respectively, if there is one candidate matched event node, the candidate matched event node may be taken as the event node matched with the conversation content, and if there are a plurality of the candidate matched event nodes, one of the candidate matched event nodes may be selected as the event node matched with the conversation content.

When one of the candidate matched event nodes is selected as the event node matched with the conversation content, the similarity between each candidate matched event node and the conversation content may be calculated respectively, and the candidate matched event node with the highest similarity is taken as the event node matched with the conversation content.

304: determining an event node for guiding reply generation from the event graph according to the matched event node and the connection mode among the event nodes.

Event nodes which conform to a preset connection relationship with the matched event node may be screened out from the event graph and serve as candidate reply event nodes; the event nodes which conform to the preset connection relationship with the matched event node may include: an event node directly connected with the matched event node through a side; or an event node directly connected with the matched event node through a side and an event node indirectly connected with the matched event node through N event nodes, N being a positive integer; if there is one candidate reply event nodes, the candidate reply event node may be taken as the event node for guiding reply generation, and if there are a plurality of candidate reply event nodes, one of the candidate reply event nodes may be selected as the event node for guiding reply generation.

When one of the candidate reply event nodes is selected as the event node for guiding reply generation, in conjunction with the reasonability of a semantic logical order, the relevance with the conversation content and the relevance with all historical conversations in the current conversation process of each candidate reply event node, an optimal candidate reply event node may be selected from the candidate reply event nodes to serve as the event node for guiding reply generation.

305: generating the conversation reply content according to the event node for guiding reply generation and the conversation content.

The event node for guiding reply generation and the conversation content may be input into a pre-trained reply generating model, so as to obtain the required conversation reply content.

It should be noted that for simplicity of description, the above-mentioned embodiments of the method are described as combinations of a series of acts, but those skilled in the art should understand that the present application is not limited by the described order of acts, as some steps may be performed in other orders or simultaneously according to the present application. Further, those skilled in the art should also understand that the embodiments described in this specification are preferred embodiments and that acts and modules referred to are not necessary for the present application. In addition, for parts that are not described in detail in a certain embodiment, reference may be made to the related descriptions of other embodiments.

With the solution of the above-mentioned method embodiment, a conversation policy management mechanism based on the event graph may be introduced in the conversation process, the logical order of the reply content in the conversation process may be better modeled, and the planning process of the conversation reply content is assisted using the event graph, thereby generating dialog coherent, informative, and engaging multi-turn conversation.

The above is a description of embodiments of the method, and the embodiments of an apparatus will be further described below.

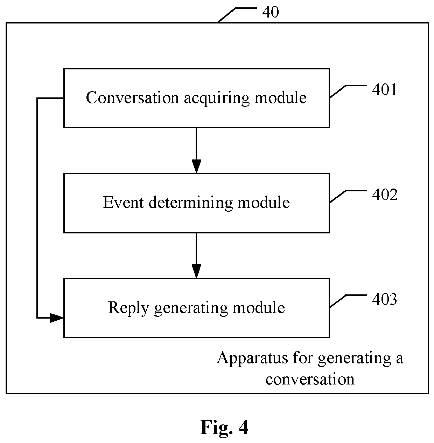

Fig. 4 is a schematic structural diagram of an apparatus 40 for generating a conversation according to an embodiment of the present application. As shown in Fig. 4, the apparatus includes:
a conversation acquiring module 401 configured to acquire conversation content to be replied;
an event determining module 402 configured to: determine an event node matched with the conversation content from an event graph, the event graph being a pre-constructed directed graph and including event nodes corresponding to different events respectively, and sides between the event nodes indicating logical relationships between the different events; and determine an event node for guiding reply generation from the event graph according to the matched event node and the connection mode among the event nodes; and
a reply generating module 403 configured to generate conversation reply content according to the event node for guiding reply generation.

The event graph may be pre-constructed, and is a directed graph in which events are used as nodes; that is, the directed graph contains the event nodes corresponding to the different events respectively, and the sides between the event nodes indicate the logical relationships among the different events. The logical relationships here may refer to, for example, a temporal order, a causal relationship, etc.

The event determining module 402 may perform word segmentation on the conversation content to be replied which is acquired by the conversation acquiring module 401, determine one or more event nodes in the event graph corresponding to the result of the word segmentation as one or more candidate matched event nodes respectively, take the candidate matched event node as the event node matched with the conversation content if there is one candidate matched event node, and select one of the candidate matched event nodes as the event node matched with the conversation content if there are a plurality of candidate matched event nodes.

When one of the candidate matched event nodes is required to be selected as the event node matched with the conversation content, the event determining module 402 may calculate the similarity between each candidate matched event node and the conversation content respectively, and then take the candidate matched event node with the highest similarity as the event node matched with the conversation content. The similarity may refer to similarity between character strings, between corresponding word vector representations, or the like.

Then, the event determining module 402 may determine the event node for guiding reply generation from the event graph according to the matched event node and the connection mode among the event nodes.

Specifically, the event determining module 402 may screen out one or more event nodes which conform to a preset connection relationship with the matched event node from the event graph as candidate reply event nodes; the one or more event nodes which conform to the preset connection relationship with the matched event node include: an event node directly connected with the matched event node through a side; or an event node directly connected with the matched event node through a side and an event node indirectly connected with the matched event node through N event nodes, N being a positive integer; the event determining module 402 takes the candidate reply event node as the event node for guiding reply generation if there are one candidate reply event node, and selects one of the candidate reply event nodes as the event node for guiding reply generation if there are a plurality of the candidate reply event nodes.

When one of the candidate reply event nodes is selected as the event node for guiding reply generation, in conjunction with the reasonability of a semantic logical order, the relevance with the conversation content and the relevance with all historical conversations in the current conversation process of each candidate reply event node, the event determining module 402 may select an optimal candidate reply event node from the candidate reply event nodes to serve as the event node for guiding reply generation.

Then, the reply generating module 403 may generate the conversation reply content according to the event node for guiding reply generation. Further, the conversation reply content may be generated according to the event node for guiding reply generation and the conversation content.

In addition, the reply generating module 403 may be further configured to input the event node for guiding reply generation and the conversation content into a pre-trained reply generating model, so as to obtain the conversation reply content.

For the specific work flow of the embodiment of the apparatus shown in Fig. 4, reference is made to the related description in the foregoing embodiments of the method, and details are not repeated.

In conclusion, with the solution of the embodiments of the apparatus according to the present application, a conversation policy management mechanism based on the event graph is introduced in the conversation process, the logical order of the reply content in the conversation process may be better modeled, and the planning process of the conversation reply content is assisted using the event graph, thereby generating dialog coherent, informative, and engaging multi-turn conversation; in addition, the event node matched with the conversation content may be conveniently determined quickly, and the determination result has good accuracy; further, the event node for guiding reply generation may be accurately selected based on the connection mode among the event nodes, the reasonability of the semantic logical order, the local relevance and the global relevance of the conversations, etc., and then, dialog coherent, informative, and engaging of the conversation reply content which is generated subsequently are further improved; furthermore, the conversation reply content may be generated in conjunction with the conversation content using the event node for guiding reply generation and the trained reply generating model, thereby further improving the dialog coherence, the informativeness, or the like, of the generated conversation reply content.

According to the embodiments of the present application, there are also provided an electronic device, a readable storage medium and a computer program product.

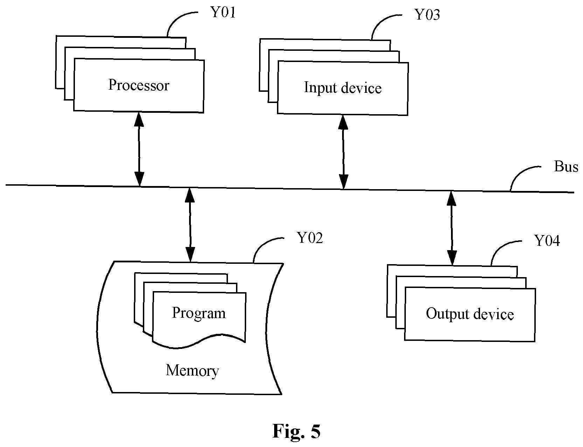

Fig. 5 is a block diagram of an electronic device for the method according to the embodiments of the present application. The electronic device is intended to represent various forms of digital computers, such as laptop computers, desktop computers, workstations, personal digital assistants, servers, blade servers, mainframe computers, and other appropriate computers. The electronic device may also represent various forms of mobile devices, such as personal digital processors, cellular telephones, smart phones, wearable devices, and other similar computing devices. The components shown herein, their connections and relationships, and their functions, are meant to be exemplary only, and are not meant to limit implementation of the present application described and/or claimed herein.

As shown in Fig. 5, the electronic device includes one or more processors Y01, a memory Y02, and interfaces configured to connect the various components, including high-speed interfaces and low-speed interfaces. The various components are interconnected using different buses and may be mounted at a common motherboard or in other manners as desired. The processor may process instructions for execution within the electronic device, including instructions stored in or at the memory to display graphical information for a graphical user interface at an external input/output device, such as a display device coupled to the interface. In other implementations, plural processors and/or plural buses may be used with plural memories, if desired. Also, plural electronic devices may be connected, with each device providing some of necessary operations (for example, as a server array, a group of blade servers, or a multiprocessor system). In Fig. 5, one processor Y01 is taken as an example.

The memory Y02 is configured as the non-transitory computer readable storage medium according to the present application. The memory stores instructions executable by the at least one processor, to cause the at least one processor to perform a method according to the present application. The non-transitory computer readable storage medium according to the present application stores computer instructions for causing a computer to perform the method according to the present application.

The memory Y02 which is a non-transitory computer readable storage medium may be configured to store non-transitory software programs, non-transitory computer executable programs and modules, such as program instructions/modules corresponding to the method according to the embodiments of the present application. The processor Y01 executes various functional applications and data processing of a server, that is, implements the method according to the above-mentioned embodiments, by running the non-transitory software programs, instructions, and modules stored in the memory Y02.

The memory Y02 may include a program storage area and a data storage area, where the program storage area may store an operating system and an application program required for at least one function; the data storage area may store data created according to use of the electronic device, or the like. Furthermore, the memory Y02 may include a high-speed random access memory, or a non-transitory memory, such as at least one magnetic disk storage device, a flash memory device, or other non-transitory solid state storage devices. In some embodiments, optionally, the memory Y02 may include memories remote from the processor Y01, and such remote memories may be connected to the electronic device via a network. Examples of such a network include, but are not limited to, the Internet, intranets, blockchain networks, local area networks, mobile communication networks, and combinations thereof.

The electronic device may further include an input device Y03 and an output device Y04. The processor Y01, the memory Y02, the input device Y03 and the output device Y04 may be connected by a bus or other means, and Fig. 5 takes the connection by a bus as an example.

The input device Y03 may receive input numeric or character information and generate key signal input related to user settings and function control of the electronic device, such as a touch screen, a keypad, a mouse, a track pad, a touch pad, a pointing stick, one or more mouse buttons, a trackball, a joystick, or the like. The output device Y04 may include a display device, an auxiliary lighting device and a tactile feedback device (for example, a vibrating motor), or the like. The display device may include, but is not limited to, a liquid crystal display, a light emitting diode display, and a plasma display. In some implementations, the display device may be a touch screen.

Various implementations of the systems and technologies described here may be implemented in digital electronic circuitry, integrated circuitry, application specific integrated circuits, computer hardware, firmware, software, and/or combinations thereof. These various implementations may be implemented in one or more computer programs which are executable and/or interpretable on a programmable system including at least one programmable processor, and the programmable processor may be special or general, and may receive data and instructions from, and transmitting data and instructions to, a storage system, at least one input device, and at least one output device.

These computer programs (also known as programs, software, software applications, or codes) include machine instructions for a programmable processor, and may be implemented using high-level procedural and/or object-oriented programming languages, and/or assembly/machine languages. As used herein, the terms "machine readable medium" and "computer readable medium" refer to any computer program product, device and/or apparatus (for example, magnetic discs, optical disks, memories, programmable logic devices) for providing machine instructions and/or data to a programmable processor, including a machine readable medium which receives machine instructions as a machine readable signal. The term "machine readable signal" refers to any signal for providing machine instructions and/or data to a programmable processor.

To provide interaction with a user, the systems and technologies described here may be implemented on a computer having: a display device (for example, a cathode ray tube or liquid crystal display monitor) for displaying information to a user; and a keyboard and a pointing device (for example, a mouse or a trackball) by which a user may provide input to the computer. Other kinds of devices may also be used to provide interaction with a user; for example, feedback provided to a user may be any form of sensory feedback (for example, visual feedback, auditory feedback, or tactile feedback); and input from a user may be received in any form (including acoustic, voice or tactile input).

The systems and technologies described here may be implemented in a computing system (for example, as a data server) which includes a back-end component, or a computing system (for example, an application server) which includes a middleware component, or a computing system (for example, a user computer having a graphical user interface or a web browser through which a user may interact with an implementation of the systems and technologies described here) which includes a front-end component, or a computing system which includes any combination of such back-end, middleware, or front-end components. The components of the system may be interconnected through any form or medium of digital data communication (for example, a communication network). Examples of the communication network include: a local area network, a wide area network, a blockchain network and the Internet.

A computer system may include a client and a server. Generally, the client and the server are remote from each other and interact through the communication network. The relationship between the client and the server is generated by virtue of computer programs which are run on respective computers and have a client-server relationship to each other.

It should be understood that various forms of the flows shown above may be used and reordered, and steps may be added or deleted. For example, the steps described in the present application may be executed in parallel, sequentially, or in different orders, and are not limited herein as long as the desired results of the technical solution disclosed in the present application may be achieved.

The above-mentioned embodiments are not intended to limit the scope of the present application. It should be understood by those skilled in the art that various modifications, combinations, sub-combinations and substitutions may be made, depending on design requirements and other factors. Any modification, equivalent substitution and improvement made within the spirit and principle of the present application all should be included in the extent of protection of the present application.

## Claims

1. A method for generating a conversation, comprising:
acquiring (101) conversation content to be replied;
determining (102) an event node matched with the conversation content from an event graph, the event graph being a pre-constructed directed graph and comprising event nodes corresponding to different events respectively, and sides between the event nodes indicating logical relationships between the different events;
determining (103) an event node for guiding reply generation from the event graph according to the matched event node and the connection mode among the event nodes; and
generating (104) conversation reply content according to the event node for guiding reply generation.

2. The method according to claim 1, wherein the determining (102) an event node matched with the conversation content from the event graph comprises:
performing word segmentation on the conversation content;
determining one or more event nodes in the event graph corresponding to the result of the word segmentation as one or more candidate matched event nodes respectively;
taking the candidate matched event node as the event node matched with the conversation content if there is one candidate matched event node; and
selecting one of the candidate matched event nodes as the event node matched with the conversation content if there are a plurality of candidate matched event nodes.

3. The method according to claim 2, wherein the selecting one of the candidate matched event nodes as the event node matched with the conversation content comprises:
calculating the similarity between each candidate matched event node and the conversation content respectively; and
taking a candidate matched event node with the highest similarity as the event node matched with the conversation content.

4. The method according to any of claims 1-3, wherein the determining (103) an event node for guiding reply generation from the event graph comprises:
screening out one or more event nodes which conform to a preset connection relationship with the matched event node from the event graph to serve as candidate reply event nodes, wherein the one or more event nodes which conform to the preset connection relationship with the matched event node comprise: an event node directly connected with the matched event node through a side; or an event node directly connected with the matched event node through a side and an event node indirectly connected with the matched event node through N event nodes, N being a positive integer;
taking the candidate reply event node as the event node for guiding reply generation if there is one candidate reply event node; and
selecting one of the candidate reply event nodes as the event node for guiding reply generation if there are a plurality of candidate reply event nodes.

5. The method according to claim 4, wherein the selecting one of the candidate reply event nodes as the event node for guiding reply generation comprises:
in conjunction with the reasonability of a semantic logical order, the relevance with the conversation content, and the relevance with all historical conversations in the current conversation process of each candidate reply event node, selecting an optimal candidate reply event node from the candidate reply event nodes to serve as the event node for guiding reply generation.

6. The method according to any of claims 1-5, wherein the generating (104) conversation reply content according to the event node for guiding reply generation comprises:
generating the conversation reply content according to the event node for guiding reply generation and the conversation content; and
preferably, the generating the conversation reply content according to the event node for guiding reply generation and the conversation content comprises:
inputting the event node for guiding reply generation and the conversation content into a pre-trained reply generating model, so as to obtain the conversation reply content.

7. An apparatus (40) for generating a conversation, comprising:
a conversation acquiring module (401) configured to acquire conversation content to be replied;
an event determining module (402) configured to: determine an event node matched with the conversation content from an event graph, the event graph being a pre-constructed directed graph and comprising event nodes corresponding to different events respectively, and sides between the event nodes indicating logical relationships between the different events; and determine an event node for guiding reply generation from the event graph according to the matched event node and the connection mode among the event nodes; and
a reply generating module (403) configured to generate conversation reply content according to the event node for guiding reply generation.

8. The apparatus (40) according to claim 7, wherein the event determining module (402) performs word segmentation on the conversation content, determines one or more event nodes in the event graph corresponding to the result of the word segmentation as one or more candidate matched event nodes respectively, takes the candidate matched event node as the event node matched with the conversation content if there is one candidate matched event nodes, and selects one of the candidate matched event nodes as the event node matched with the conversation content if there are a plurality of candidate matched event nodes.

9. The apparatus (40) according to claim 8, wherein the event determining module (402) calculates the similarity between each candidate matched event node and the conversation content respectively, and takes a candidate matched event node with the highest similarity as the event node matched with the conversation content.

10. The apparatus (40) according to any of claims 7-9, wherein the event determining module (402) screens out one or more event nodes which conform to a preset connection relationship with the matched event node from the event graph as candidate reply event nodes; the one or more event nodes which conform to the preset connection relationship with the matched event node comprise: an event node directly connected with the matched event node through a side; or an event node directly connected with the matched event node through a side and an event node indirectly connected with the matched event node through N event nodes, N being a positive integer; the event determining module takes the candidate reply event node as the event node for guiding reply generation if there is one candidate reply event node, and selects one of the candidate reply event node as the event node for guiding reply generation if there are a plurality of candidate reply event nodes.

11. The apparatus (40) according to claim 10, wherein in conjunction with the reasonability of a semantic logical order, the relevance with the conversation content and the relevance with all historical conversations in the current conversation process of each candidate reply event node, the event determining module (402) selects an optimal candidate reply event node from the candidate reply event nodes to serve as the event node for guiding reply generation.

12. The apparatus (40) according to any of claims 7-11, wherein the reply generating module (403) is further configured to generate the conversation reply content according to the event node for guiding reply generation and the conversation content, and preferably, the reply generating module inputs the event node for guiding reply generation and the conversation content into a pre-trained reply generating model, so as to obtain the conversation reply content.

13. An electronic device, comprising:
at least one processor(Y01); and
a memory (Y02) connected with the at least one processor (Y01) communicatively;
wherein the memory (Y02) stores instructions executable by the at least one processor to (Y01) cause the at least one processor (Y01) to perform the method according to any one of claims 1 to 6.

14. A non-transitory computer-readable storage medium comprising instructions, which, when executed by a computer, cause the computer to carry out the method according to any of claims 1 to 6.

15. A computer program product comprising instructions which, when the program is executed by a computer, cause the computer to carry out the method according to any of claims 1 to 6.
